# EUROPÄISCHE PATENTSCHRIFT

(11) **EP 0 617 056 B1**
(45) Veröffentlichungstag und Bekanntmachung des Hinweises auf die Patenterteilung: **20.10.1999**
(21) Anmeldenummer: 94103956.2
(22) Anmeldetag: 15.03.1994
(51) Int. Cl.: C08F 8/32, C08F 8/04, C10L 1/22

(54) **Verfahren zur Herstellung von Kraftstoffadditiven**
Process for manufacturing fuel additives
Procédé de préparation d'additifs pour carburant

(30) Priorität: 23.03.1993 DE 4309271
(43) Veröffentlichungstag der Anmeldung: 28.09.1994
(73) Patentinhaber: BASF Aktiengesellschaft, 67063 Ludwigshafen (DE)
(72) Erfinder: Franz, Lothar, Dr., D-67112 Mutterstadt (DE); Mohr, Juergen, Dr., D-67269 Gruenstadt (DE); Schreyer, Peter, Dr., D-69469 Weinheim (DE); Thomas, Juergen, Dr., D-67136 Fussgoenheim (DE); Oppenlaender, Knut, Dr., D-67061 Ludwigshafen (DE); Guenther, Wolfgang, Dr., D-67582 Mettenheim (DE)

(56) Entgegenhaltungen:
- EP-A- 0 244 616
- EP-A- 0 382 405
- GB-A- 1 172 818
- GB-A- 2 136 438

## Beschreibung

Die Erfindung betrifft ein verbessertes Verfahren zur Herstellung von Kraftstoffadditiven auf Basis eines langkettigen Kohlenwasserstoffs mit einer polaren Endgruppe, bei dem ein Olefin zunächst hydroformyliert, das Reaktionsprodukt anschließend mit einem Polyamin umgesetzt und schließlich hydriert wird.

Vergaser und Einlaßsysteme von Ottomotoren, aber auch Einspritzsysteme für die Kraftstoffdosierung in Otto- und Dieselmotoren werden in zunehmendem Maße durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Diese Rückstände verschieben das Luft-Kraftstoffverhältnis im Leerlauf und im unteren Teillastbereich, so daß das Gemisch fetter, die Verbrennung unvollständiger und wiederum die Anteile unverbrannter oder teilverbrannter Kohlenwasserstoffe im Abgas größer werden und der Benzinverbrauch steigt.

Es ist bekannt, daß zur Vermeidung dieser Nachteile Kraftstoffadditive zur Reinhaltung von Ventilen und Vergaser bzw. Einspritzsystemen verwendet werden (vgl. z.B.: M. Rossenbeck in Katalysatoren, Tenside, Mineralöladditive, Hrsg. J. Falbe, U. Hasserodt, S. 223, G. Thieme Verlag, Stuttgart 1978).

Je nach Wirkungsweise aber auch nach dem bevorzugten Wirkort solcher Detergent-Additive unterscheidet man heute zwei Generationen.

Die erste Additiv-Generation konnte nur die Bildung von Ablagerungen im Ansaugsystem verhindern, nicht aber bereits vorhandene Ablagerungen wieder entfernen, wohingegen die modernen Additive der zweiten Generation beides bewirken können ("keep-clean-" und "clean-up-Effekt") und zwar insbesondere auch aufgrund ihrer hervorragenden Thermostabilität an Zonen höherer Temperaturen, nämlich an den Einlaßventilen.

Das molekulare Bauprinzip dieser als Detergenzien wirkenden Additive kann verallgemeinernd angegeben werden als Verknüpfung polarer Strukturen mit meist höhermolekularen, unpolaren oder oleophilen Resten.

Vertreter der zweiten Additiv-Generation sind oft Produkte auf der Basis von Polyisobutenen im unpolaren Molekülteil. Hier wiederum heben sich Additive vom Polyisobutylamin-Typ besonders hervor.

Detergenzien vom Typ der Polyisobutylamine erhält man, ausgehend von Polyisobutenen, im wesentlichen nach zwei Verfahren.

Das erste verläuft über eine Chlorierung des polymeren Grundkörpers und anschließenden nukleophilen Ersatz des Halogens durch Amine oder vorzugsweise Ammoniak (DE-OS 2 245 918). Der Nachteil dieses Verfahrens ist die Verwendung von Chlor und das Auftreten von chlor- oder chloridhaltigen Produkten, die heute keinesfalls mehr erwünscht sind und soweit irgend möglich gemieden werden.

Im zweiten Verfahren wird ein reaktives Polyisobuten zunächst in einer Oxosynthese hydroformyliert und danach in Anwesenheit von Aminen aminierend hydriert (DE-OS 36 11 230).

Wird in diesem zweiten Verfahren bei der aminierenden Hydrierung Ammoniak eingesetzt, so zeigen die Umsetzungsprodukte des Ammoniaks meist eine ausgezeichnete Wirksamkeit in der Ventil- und Vergaserreinhaltung, verhalten sich jedoch allenfalls neutral in ihrer Wirkung auf einen Motorschmierstoff, insbesondere hinsichtlich ihrer Schlammdispergierung.

Von besonderem technischen Interesse sind daher solche Stoffe, die gleichzeitig die Eigenschaften sowohl von Detergenzien als auch von Dispergatoren in sich vereinigen.

Es ist bekannt, daß Umsetzungsprodukte mit Polyaminen diese Eigenschaften aufweisen können. Derartige Polyamin-Umsetzungsprodukte zeigen in Abhängigkeit von der Herstellung aber entweder den obengenannten Nachteil des Halogengehalts oder, wenn sie nach dem zweiten Verfahren hergestellt werden, können sich bei der hydrierenden Aminierung aus den eingesetzten Polyaminen störende Nebenprodukte bilden.

Der vorliegenden Erfindung liegt daher die Aufgabe zugrunde, Kraftstoffadditive zur Verfügung zu stellen, die sowohl eine gute Wirkung bezüglich der Ventil- und Vergaserreinhaltung als auch bezüglich der Ölschlammdispergierung aufweisen, und die darüber hinaus frei von Halogenverunreinigungen sind und bei deren Herstellung keine Polyamin-Kondensationsnebenprodukte entstehen.

Es wurde gefunden, daß diese Aufgabe gelöst wird durch ein Verfahren zur Herstellung von Kraftstoffadditiven, bei dem
a) ein langkettiges Olefin mit einem Molekulargewicht von 250 bis 5000 (Zahlenmittel) in Gegenwart von CO und H₂ bei Temperaturen von 80°C bis 200°C und CO/H₂-Drücken von bis zu 600 bar hydroformyliert wird,
b) das Reaktionsprodukt mit einem Polyamin der folgenden Formel I umgesetzt wird 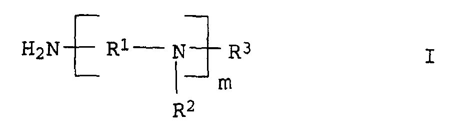 in der m = 1 - 10 ist, R¹ ein verzweigter oder unverzweigter Alkylenrest mit 2 bis 6 C-Atomen ist, wobei die Reste R¹ voneinander verschieden sein können, wenn m > 1 ist, R² und R³ unabhängig voneinander Wasserstoff, einen Alkylrest mit 1-6 C-Atomen oder einen Hydroxyalkylrest mit 1-6 C-Atomen bedeuten oder R² und R³ gemeinsam mit dem Stickstoff, an den sie gebunden sind, einen heterocyclischen Ring, der noch weitere Heteroatome aufweisen kann, bilden,
und anschließend
c) das dabei entstehende Reaktionsprodukt in Gegenwart von Wasserstoff und gegebenenfalls NH₃ katalytisch hydriert wird.

Bei der Herstellung der Kraftstoffadditive treten in Reaktionsschritt b) als Zwischenprodukt Azomethine (Schiff'sche Basen) der allgemeinen Formel II 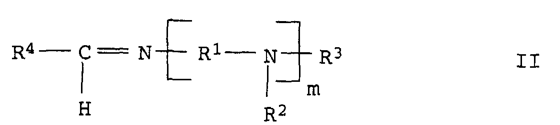 auf, in der
R⁴ ein aliphatischer, Alkyl-Seitengruppen aufweisender Kohlenwasserstoffrest mit einem Molekulargewicht (Zahlenmittel) von 250 bis 5000 ist und R¹, R², R³ und m die oben angegebene Bedeutung haben.

Diese Azomethine können ebenfalls als Kraftstoffadditive eingesetzt werden. Die Verwendung derartiger Azomethine in Kraftstoffen für Ottomotoren ist jedoch schon aus der GB-A 1 172 818 bekannt.

Zur Herstellung der Kraftstoffadditive werden als Olefine bevorzugt Polyisobutene eingesetzt, die sich von Isobuten und O bis 30 Gew.-% n-Buten ableiten.

Als Polyamine zur Herstellung der erfindungsgemäßen Kraftstoffadditive können eingesetzt werden N,N-Dialkylalkylenpolyamine, wie z .B. N,N-Dimethylpropylendiamin und N,N-Dimethyldiethylentriamin, Polyalkylenpolyamine, wie z.B. Ethylendiamin, Diethylentriamin, Triethylentetramin, Tetraethylenpentamin, Dipropylentriamin, Ethylenpropylentriamin und Ethylendipropylentetramin, sowie technische Gemische aus Oligoethylenpolyaminen, N-Hydroxyalkylalkylenpolyamine, wie z.B. Aminoethylethanolamin (N-Hydroxyethylethylendiamin) und Polyamine mit einem N-Heterocyclus, wie z.B. Aminoethylpiperazin.

Als Polyamine der allgemeinen Formel I werden bevorzugt Verbindungen eingesetzt, in denen R¹ die Ethylengruppe, R² und R³ Wasserstoff und m = 1-5 bedeuten.

Ganz besonders bevorzugt sind Ethylendiamin, Diethylentriamin, Triethylentetramin und Tetraethylenpentamin.

Die erfindungsgemäß hergestellten Kraftstoffadditive werden über die Hydroformylierung entsprechender Poly- bzw. Oligoolefine und anschließende Umsetzung der so gewonnen Carbonylverbindungen (überwiegend Aldehyde) mit den Polyaminen, gefolgt von einer Hydrierung der intermediär gebildeten Schiff'schen Basen, erhalten.

Zu diesem Zweck wird z.B. ein Polyisobuten einer Hydroformylierung unterzogen, wobei ein Aldehyd gebildet wird, den man in der Folge mit einem Polyamin unter Bildung der Schiff'schen Base zur Reaktion bringt. Der bei der Hydroformylierung ebenfalls mitgebildete Alkohol kann als nicht störende Komponente für die weitere Umsetzung im Reaktionsgemisch verbleiben. Die Azomethine werden anschließend einer katalytischen Hydrierung mit Wasserstoff zu den Aminderivaten unterzogen. In einer Variante dieser Reaktion wird die Reduktion in Gegenwart von Ammoniak durchgeführt.

Das verwendete Olefin (z.B. Polyisobuten) besitzt ein Molekulargewicht zwischen 250 und 5000, vorzugsweise zwischen 800 und 1500. Es wird nach bekanntem Verfahren durch kationische Polymerisation von z.B. Isobuten erhalten, wobei nach Abbruch der Polymerkette im zuletzt eingebauten Monomeren eine Doppelbindung generiert wird, die zur weiteren Funktionalisierung genutzt werden kann (vgl. z.B.: DE-OS 2 702 604).

Die Hydroformylierung gemäß Reaktionsschritt a) erfolgt in an sich bekannter Weise, wie es auch in der DE-OS 36 11 230 beschrieben ist. Die Umsetzung des Hydroformylierungs-Reaktionsprodukts mit dem Polyamin nach Abtrennung der Hydroformylierungskatalysatoren (Reaktionsschritt b)) erfolgt bevorzugt in einem Lösungsmittel, mit dem Wasser azeotrop aus dem Reaktionsgemisch entfernt werden kann. Als Lösungsmittel ist z.B. Cyclohexan geeignet. Die Umsetzung gemäß Reaktionsschritt b) wird vorzugsweise in einem inerten Lösungsmittel durchgeführt. Die Hydrierung gemäß Reaktionsschritt c) wird analog zu bekannten Hydrierungen ausgeführt, als Katalysator sind die üblichen Katalysatoren, wie z.B. Raney-Ni oder Raney-Co, einsetzbar. Die Hydrierung verläuft üblicherweise in einem Autoklaven unter Druck bei Temperaturen von 50°C bis 300°C. Vorzugsweise hydriert man bei 80°C bis 200°C und H₂-Drücken bis zu 600 bar. Wird die Hydrierung in Gegenwart von NH₃ ausgeführt, kann eine Umwandlung der als Nebenprodukt gebildeten Alkohole in Amine erreicht werden.

Die gemäß obigem Verfahren erhaltenen Kraftstoffadditive verfügen neben der Wirksamkeit als Detergentien im Einlaßsystem auch über dispergierende Eigenschaften im Motorenöl, während sich die herkömmlichen Polyisobutylamine allenfalls Ölschlamm-neutral verhalten.

Die erfindungsgemäß hergestellten Kraftstoffadditive werden aufgrund ihrer Eigenschaften als Detergenzien und Dispergatoren in Kraftstoffen, insbesondere in Kraftstoffen von Ottomotoren, eingesetzt. Sie können jedoch auch in Schmierstoffen Verwendung finden.

Werden die Additive in Kraftstoffen eingesetzt, so gibt man sie bevorzugt in einer Menge von 10 bis 5 000 ppm, insbesondere 50 bis 1 000 ppm zu. In Schmierstoffen muß in der Regel höher additiviert werden.

Sollen in erster Linie die dispergierenden Eigenschaften der erfindungsgemäß hergestellten Additive genutzt werden, so kann man sie auch mit herkömmlichen Detergenzien als zusätzlichen Additiven kombinieren.

Als Detergens-Komponente in der Mischung mit den erfindungsgemäß hergestellten Additive als Dispergatoren kann prinzipiell jedes bekannte der hierfür geeigneten Produkte eingesetzt werden, wie sie z.B. bei J. Falbe, U. Hasserodt, Katalysatoren, Tenside und Mineralöladditive, G. Thieme Verlag Stuttgart 1978, S. 221 f. oder bei K. Owen, Gasoline and Diesel Fuel Additives, John Wiley & Sons 1989, S. 23 ff., beschrieben sind.

Vorzugsweise verwendet man N-haltige Detergenzien, z.B. Verbindungen, die eine Amin- oder Amid-Gruppe enthalten. Insbesondere geeignet sind Polyisobutylamine gemäß EP 0 244 616, Ethylendiamintetraessigsäureamide und/oder -imide gemäß EP 0 188 786 oder Polyetheramine gemäß EP 0 356 725, wobei auf die Definitionen in diesen Literaturstellen Bezug genommen wird. Die dort beschriebenen Produkte verfügen herstellungsbedingt ebenfalls über den Vorteil, chlor- bzw. chloridfrei zu sein.

Soll in erster Linie die Detergens-Wirkung der erfindungsgemäß hergestellten Additive genutzt werden, so können diese Additive auch mit Trägerölen kombiniert werden. Derartige Trägeröle sind bekannt, insbesondere eignen sich Trägeröle auf Polyglykolbasis, z.B. entsprechende Ether und/oder Ester, wie sie in der US 5 004 478 oder der DE 38 38 918 A1 beschrieben sind. Auch Polyoxyalkylenmonoole mit Kohlenwasserstoffendgruppen (US 4 877 416) oder Trägeröle, wie sie in der DE 41 42 241.4 offenbart sind, können eingesetzt werden.

Als Kraftstoffe für Ottomotoren kommen verbleites und insbesondere unverbleites Normal- und Superbenzin in Betracht. Die Benzine können auch andere Komponenten als Kohlenwasserstoffe, z.B. Alkohole wie Methanol, Ethanol, tert.-Butanol sowie Ether, z.B. Methyltertiärbutylether enthalten. Neben den erfindungsgemäß hergestellten Additiven enthalten die Kraftstoffe in der Regel noch weitere Zusätze wie Korrosionsinhibitoren, Stabilisatoren, Antioxidantien und/oder weitere Detergentien.

Korrosionsinhibitoren sind meist Ammoniumsalze org. Carbonsäuren, die durch entsprechende Struktur der Ausgangsverbindungen zur Filmbildung neigen. Auch Amine zur Absenkung des pH-Wertes finden sich häufig in Korrosionsinhibitoren. Als Buntmetallkorrosionsschutz werden meist heterocyclische Aromaten eingesetzt.

Die Prüfung der erfindungsgemäß hergestellten Kraftstoffadditive auf Eignung als Ventilreiniger wurde in einem VW-Polo-Motor und gemäß DKA-Vorschlag in einem Mercedes-Benz M 102 E-Motor durchgeführt.

### Beispiele

1. Herstellung der Azomethine
1.1. Hydroformylierung des Polyisobutens
   500 g Polyisobuten (PIB) mit einem Molgewicht Mₙ=950, 300 g Dodecan und 2,8 g Co-Octacarbonyl wurden in einem 2,5 l Hubrührautoklaven bei 280 bar CO/H₂ 1:1 unter Rühren 5 Stunden auf 185°C erhitzt. Dann kühlte man auf Raumtemperatur ab und entfernt den Katalysator mit 400 ml 10%iger wäßriger Essigsäure. Anschließend wird neutral gewaschen. Das so erhaltene Produkt enthält vor allem PIB-Aldehyd, aber auch PIB-Alkohol.
1.2. Azomethinbildung
   1,7 kg (1 Mol) des obigen PIB-Produktes wurden mit 0,5 mol eines Polyamins gemäß Tabelle 1 versetzt. Nach Zugabe von 500 ml Cyclohexan wurde das Reaktionswasser ausgekreist.
   Nach Umsetzung mit Diethylentriamin als Polyaminkomponente lag das ¹H-NMR-Signal für die (CH=N)-Gruppe bei 7,45 ppm (CDCl₃).

2. Motorentest
Keep clean test bei Einlaßventilen
Motor: Opel-Kadett 1,2 l (nach CEC F-04-A-87)
Kraftstoff: Eurosuper bleifrei, Dosierung des Additivs 800 ppm
Als Additiv diente ein nach Beispiel 1.1 und 1.2 mit Dimethylaminopropylamin als Polyaminkomponente hergestelltes Azomethin.

| Gemisch | Ablagerung [mg], Ventil-Nr. | | | | Mittelwert |
|---|---|---|---|---|---|
| | 1 | 2 | 3 | 4 | |
| Grundwert ohne Additiv | 447 | 262 | 21 | 667 | 349 |
| Kraftstoff mit Azomethin | 5 | 5 | 3 | 2 | 4 |

Das Ergebnis zeigt deutlich die ventilreinigende Wirkung des erfindungsgemäßen Azomethins.
3. Hydrierung der Azomethine
Es wurden 1 kg der gemäß 1) hergestellten Azomethine unter Zusatz von 100 g Raney-Ni bei 200°C und 250 bar im Autoklaven eingesetzt. Die Reaktionsdauer betrug 4 Stunden. Nach dem Abziehen der im Reaktionsgemisch enthaltenen Leichtsieder wurden die in der Tabelle 1 angegebenen Aminzahlen bestimmt.
Alternativ zur Hydrierung wurde auch eine hydrierende Aminierung der Azomethine durchgeführt. Dabei wurden 500 g des entsprechenden Azomethins mit 500 g Raney-Ni und 500 g NH₃ ebenfalls 4 Stunden zur Reaktion gebracht. Die Aufarbeitung erfolgte wie bei der Hydrierung.

**Tabelle 1**

| Eingesetzte Amine | Aminzahl nach Hydrierung | Aminzahl nach aminierender Hydrierung |
|---|---|---|
| Ethylendiamin (EDA) | 21,5 | 34,7 |
| Aminoethylethanolamin (AEEA) | 28,2 | - |
| Diethylentriamin (DETA) | 28,3 | 41,3 |
| Tetraethylenpentamin (TEPA) | 36,2 | - |

4. Motorentest
Keep clean test bei Einlaßventilen
4.1.Motor: Mercedes-Benz M 102 E (gemäß DKA)
- Kraftstoff:: Eurosuper 169 bleifrei, Dosierung des Additivs jeweils 600 ppm

| Gemisch | Ablagerung [mg], Ventil-Nr. | | | | Mittelwert |
|---|---|---|---|---|---|
| | 1 | 2 | 3 | 4 | |
| Grundwert ohne Additiv | 341 | 330 | 369 | 229 | 317 |

| Kraftstoff mit: | | | | | |
|---|---|---|---|---|---|
| Polyisobutylamin (Vergleich) nach DE-OS 3611230 | 14 | 0 | 5 | 20 | 10 |
| PIB-DETA, aminierend hydriert | 3 | 0 | 7 | 10 | 5 |
| PIB-DETA, hydriert | 0 | 0 | 0 | 0 | 0 |
| PIB-EDA, hydriert | 0 | 0 | 8 | 9 | 4 |

Aus den Ergebnissen wird deutlich, daß mit den erfindungsgemäßen Additiven sehr gute Ergebnisse bezüglich der Ventilreinigung erreicht werden.
4.2.Motor: VW-Polo 1,05 l
Kraftstoff: Eurosuper 174 bleifrei, Dosierung des Additivs jeweils 400 ppm

| Gemisch | Ablagerung [mg], Ventil-Nr. | | | | Mittelwert |
|---|---|---|---|---|---|
| | 1 | 2 | 3 | 4 | |
| Grundwert ohne Additiv | 182 | 112 | 115 | 103 | 129 |

| Kraftstoff mit: | | | | | |
|---|---|---|---|---|---|
| Polyisobutylamin nach DE-OS 36 11 230 | 0 | 0 | 0 | 0 | 0 |
| PIB-EDA, hydriert | 0 | 0 | 0 | 0 | 0 |
| PIB-DETA, hydriert | 0 | 0 | 0 | 0 | 0 |
| PIB-TEPA, hydriert | 0 | 0 | 0 | 0 | 0 |

Aus den Ergebnissen wird deutlich, daß die erfindungsgemäß hergestellten Kraftstoffadditive ebensogute Ergebnisse liefern wie das bekannte PIBA, aber darüber hinaus auch noch Schlamm-dispergierende Eigenschaften aufweisen, im Gesamteigenschaftsbild daher vorteilhaft sind.

## Patentansprüche

1. Verfahren zur Herstellung von Kraftstoffadditiven, bei dem
a) ein langkettiges Olefin mit einem Molekulargewicht von 250 bis 5000 (Zahlenmittel) in Gegenwart von CO und H₂ bei Temperaturen von 80°C bis 200°C und CO/H₂-Drücken von bis zu 600 bar hydroformyliert wird,
b) das Reaktionsprodukt mit einem Polyamin der folgenden Formel I umgesetzt wird 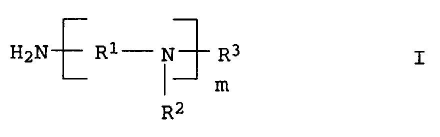 in der m = 1 - 10 ist,
R¹ ein verzweigter oder unverzweigter Alkylenrest mit 2 bis 6 C-Atomen ist, und die Reste R¹ voneinander verschieden sein können wenn m > 1 ist,
R² und R³ unabhängig voneinander Wasserstoff, einen Alkylrest mit 1-6 C-Atomen oder einen Hydroxyalkylrest mit 1-6 C-Atomen bedeuten oder R² und R³ gemeinsam mit dem Stickstoff, an den sie gebunden sind, einen heterocyclischen Ring, der noch weitere Heteroatome aufweisen kann, bilden,
und anschließend
c) das dabei entstehende Reaktionsprodukt in Gegenwart von H₂ und gegebenenfalls NH₃ katalytisch hydriert wird.

2. Verfahren nach Anspruch 1, dadurch gekennzeichnet, daß im Reaktionsschritt b) die Umsetzung in einem inerten Lösungsmittel durchgeführt wird.

3. Verfahren nach Anspruch 1, dadurch gekennzeichnet, daß in Reaktionsschritt c) bei 80°C bis 200°C und H₂-Drücken bis zu 600 bar hydriert wird.

## Revendications

1. Procédé de préparation d'additifs pour carburants, au cours duquel
a) une oléfine à longue chaîne ayant une masse moléculaire de 250-5000 (moyenne en nombre) est hydroformylée en présence de CO et H₂, à des températures de 80-200°C et sous des pressions CO/H₂ allant jusqu'à 600 bar,
b) le produit réactionnel est mis à réagir avec une polyamine ayant la formule suivante I 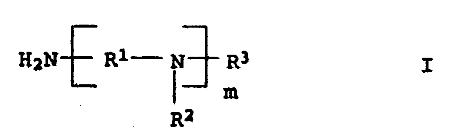 dans laquelle m = 1-10,
R¹ représente un reste alkylène linéaire ou ramifié ayant de 2 à 6 atomes de C, et les restes R¹ peuvent être différents les uns des autres lorsque m > 1,
R² et R³ représentent, indépendamment l'un de l'autre, un atome d'hydrogène, un reste alkyle ayant de 1 à 6 atomes de C ou un reste hydroxyalkyle ayant de 1 à 6 atomes de C ou bien R² et R³ forment ensemble, avec l'atome d'azote qui les relie, un cycle hétérocyclique pouvant comporter d'autres hétéroatomes,
et, ensuite
c) le produit réactionnel ainsi obtenu est hydrogéné de façon catalytique en présence de H₂ et éventuellement de NH₃.

2. Procédé selon la revendication 1, caractérisé en ce que la réaction de l'étape réactionnelle b) est menée dans un solvant inerte.

3. Procédé selon la revendication 1, caractérisé en ce que l'on hydrogène, dans l'étape réactionnelle c), à 80-200°C et sous une pression de H₂ allant jusqu'à 600 bar.

## Claims

1. A process for the preparation of a fuel additive, wherein
a) a long-chain olefin having a number average molecular weight of from 250 to 5,000 is hydroformylated in the presence of CO and H₂ at from 80 to 200°C and CO/H₂ pressures of up to 600 bar,
b) the reaction product is reacted with a polyamine of the following formula I 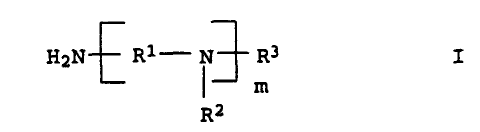 where m is 1-10, R¹ is branched or straight-chain alkylene of 2 to 6 carbon atoms and the radicals R¹ may be different from one another when m is > 1, R² and R³ independently of one another are each hydrogen, alkyl of 1 to 6 carbon atoms or hydroxyalkyl of 1 to 6 carbon atoms, or R² and R³, together with the nitrogen to which they are bonded, form a heterocyclic ring which may have further heteroatoms,
and then
c) the resulting reaction product is catalytically hydrogenated in the presence of H₂ and in the presence or absence of NH₃.

2. A process as claimed in claim 1, wherein, in reaction step b), the reaction is carried out in an inert solvent.

3. A process as claimed in claim 1, wherein, in reaction step c), hydrogenation is carried out at from 80 to 200°C and at H₂ pressures of up to 600 bar.
